# EUROPEAN PATENT APPLICATION

(11) **EP 0 819 384 A1**
(43) Date of publication of application: **21.01.1998**
(21) Application number: 97111102.6
(22) Date of filing: 03.07.1997
(51) Int. Cl.: A23G 9/22, A23G 7/00, A23G 9/26

(54) **Self-aligning articulated clamp, for handling ice creams on sticks**

(30) Priority: 19.07.1996 IT BO960399
(71) Applicant: CATTA 27 S.r.l., I-40056 Crespellano (Bologna) (IT)
(72) Inventor: Cocchi, Giuliano, 40123 Bologna (IT); Zaniboni, Gianni, 40037 Sasso Marconi, Bologna (IT)
(74) Representative: Porsia, Attilio, Dr.

(57) **Abstract**

The body (7, 9) of the clamp is mounted on the support and actuation body (27) via an articulated joint (125, 126) formed by frustopyramidal elements which have a polygonal section and are oriented with their axes perpendicular to the longitudinal axis of the clamp and which, using suitable means (128, 31, 32) and a servo-mechanism (28), can be pushed axially one inside the other and locked in this position or can have a small degree of axial play so that the clamp can oscillate through a wide angle about the axis of the articulated joint in order to position itself so that it can grip the ice cream stick correctly, even if the latter is at an angle to or out of alignment with the ideal position.

## Description

The present invention relates to the handling of ice creams on sticks. During the production cycle to make ice creams on sticks, the ice creams come out of the refrigeration tunnel in a single file, with their sticks positioned transversely to and down one side of the conveyor path. so-called pick and place means operate outside the tunnel and have self-aligning clamps that grip the ice creams by their sticks, usually gripping the stick in three opposing places, and then transfer the ice creams to the subsequent processing means.

Clamps of the known type have the following disadvantages. The ice cream stick is almost never in perfect alignment with the clamp and, since the latter is mounted rigidly on its associated actuation means, the clamp jaws have a tendency to close incorrectly around the stick, exerting detrimental stresses on the ice cream and possibly damaging the stick itself and/or gaining an unstable grip on the ice cream or even failing to gain a grip at all.

Added to this disadvantage is the fact that the practice of gripping the stick in three places has proved to be unreliable, especially when the stick is positioned incorrectly or is not in the ideal position with respect to the clamp.

The invention aims to overcome these and other disadvantages by means of the following solution. The clamp, together with the associated servomechanism for opening and closing it, is mounted on the support and actuation means via an articulated joint which has a prismatic section and is positioned so that its axis is perpendicular to the axis of the clamp. When the clamp is in the process of gripping the ice cream stick, this articulated joint can be activated by means of a suitable servomechanism so that its position can be adapted if the stick is not ideally oriented and/or if the shape of its sides is not straight. The said servomechanism then locks the articulated joint in position to ensure that the clamp and the ice cream are correctly oriented with respect to the transfer means and the subsequent processing means. In order to ensure that the stick is gripped more securely and accurately, the body of the clamp is fitted with a rod that acts perpendicularly on the middle of that portion of the stick which has been clamped by the three jaws of the clamp. These and other characteristic features of the clamp in question, together with the advantages which derive therefrom, will become clearer on reading the following description of a preferred embodiment of the latter which is illustrated purely by way of non-limiting example in the figures of the three appended plates of drawings, in which:
- Fig. 1 is a perspective view of the clamp in the closed position in which it grips the ice cream by its stick;
- Fig. 2 shows the clamp of Fig. 1 in partial section on the plane II-II;
- Fig. 3 shows details of the prismatic articulated joint of the clamp, in partial section on the plane III-III in Fig. 2;
- Figs 4 and 5 show other details of the clamp, sectioned on the plane IV-IV in Figure 2, in the open position and closed around the ice cream stick respectively;
- Fig. 6 is a plan view of the clamp gripping means, viewed on the cutting plane VI-VI in Figure 5;
- Figs 7 and 8 show a plan view and a side view respectively of an ice cream, illustrating the possible degrees of misalignment of the stick that can be tolerated by the clamp in question.

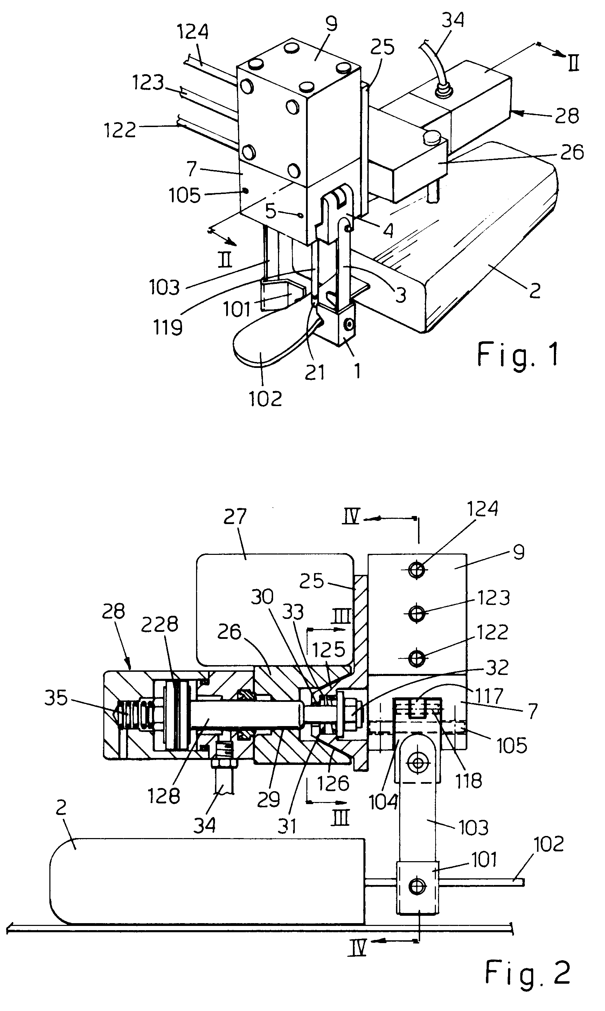

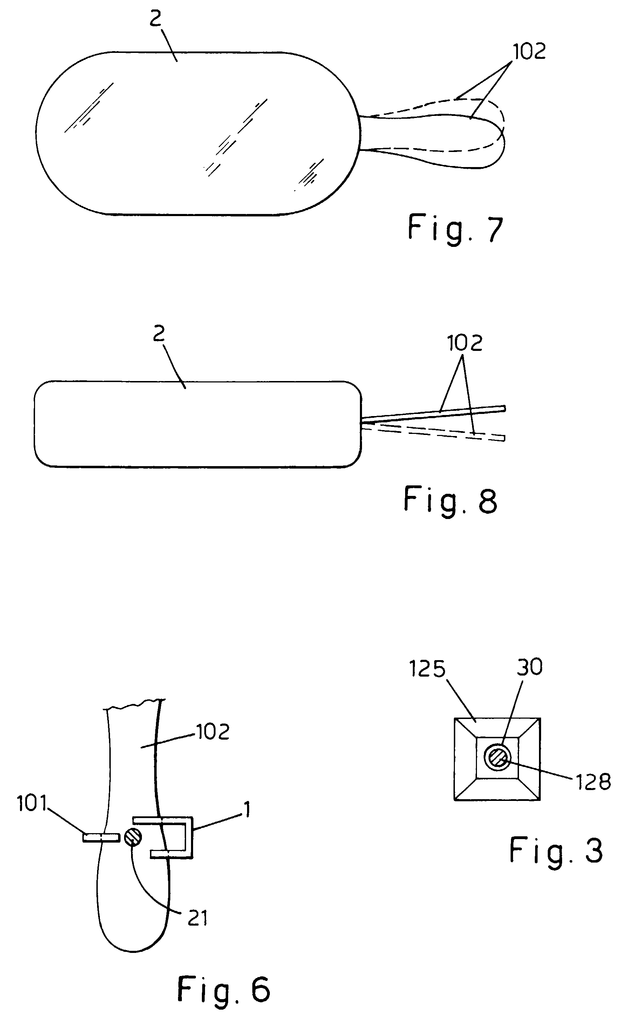

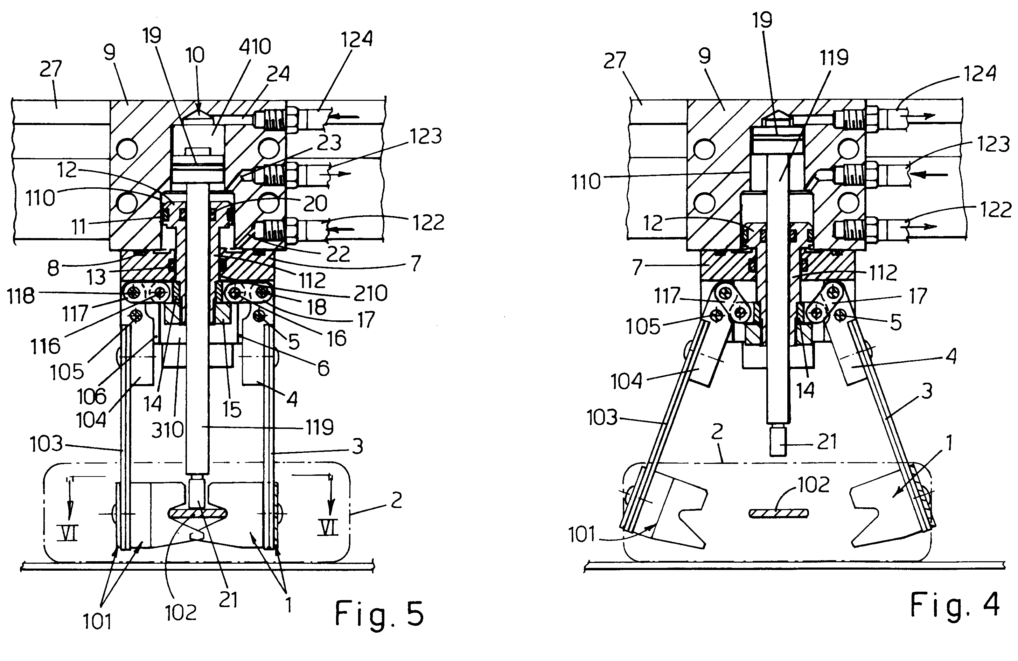

In Figures 1 and 2 the reference numerals 1 and 101 indicate the clamp jaws which have a basically V-shaped profile. The first of these jaws is fitted with two parallel teeth, whereas the other jaw is fitted with a single tooth which is oriented along the centre line of the two opposite teeth in order to grip the stick 102 of the ice cream 2 transversely in three places, basically as in the prior art and as illustrated diagrammatically in Figure 6. The jaws 1, 101 are attached to the lower ends of arms 3, 103 (see also Fig. 4) that may be rigid or flexible, made up, for example, of leaf springs. The upper ends of these arms are attached to levers 4, 104 pivoting at an intermediate point at 5, 105 inside opposite slots 6, 106 that are open on the bottom and are formed in the lower end of a support 7 which is attached, via a sealing ring 8, to a superjacent body 9 associated, as stated above, with the clamp actuation means. A blind hole 10 is formed in the bodies 7 and 9, orthogonal to the axes 5, 105 and equidistant from these. The blind end of this hole 10 is situated in the body 9 where it has an intermediate portion 110 of suitable cross-section in which a piston 12 slides with seals 11 providing lateral sealing. The piston 12 has a rod 112 that passes through that portion 210 of the hole which is situated in the body 7, with the seal 13 providing lateral sealing, and also passes through a portion 310 of the hole which has a larger diameter and inside which the said rod supports a ring 14 and its associated axial locking nut 15. The ring 14 has external milled portions opposite each other and parallel to its axis, in which the ends of identical link rods 17, 117 pivot at 16, 116, the other ends of these link rods being in turn articulated at 18, 118 to the upper and forked ends of the levers 4, 104.

The portion 110 of the hole joins the portion 410 of the blind hole in which a piston 19 slides with lateral sealing and has a rod 119 that passes axially through the unit 12, 112 via the seal 20. The end of the rod 119 carries the pressing element 21 that is designed to act on the ice cream stick, at a point equidistant from the sides where the said stick is gripped by the jaws 1, 101 of the clamp (Fig. 6). Channels 22 and 23 open into the end of the portion 110 of the hole and are connected to respective tubes 122, 123, while a channel 24 opens into the top of the portion 410 of the hole and is connected to a tube 124.

At rest, the clamp is in the position shown in Fig. 4, with the rod 112 lowered and the rod 119 raised. The tubes 122 and 124 are connected to a discharge outlet while the intermediate tube 123 is connected to a compressed air source. When, on the other hand, the clamp has been positioned above the stick 102 of the ice cream 2 in order to grip it, the tube 123 is connected to the discharge outlet and the tube 122 is connected to a compressed air source in order to raise the unit 12, 112 and close the jaws 1, 101 around the stick, as illustrated in Figure 5. It is clear from this figure that, at the end of the stroke to raise the piston 12, the link rods 17, 117 are located on the same plane or converge slightly upwards, so that the clamp stays closed even if there is no pressure in the tube 122. As the clamp closes, the tube 124 is also connected to the compressed air source in order to lower the unit 19, 119 and so that the pressing element 21 can act on the stick 102 which is thus forced to engage correctly with the jaws 1, 101 of the clamp and is gripped in four places, thereby ensuring that the ice cream is gripped more securely by the clamp in question (see also Figure 6).

Figures 1 and 2 show that the abovementioned bodies 7 and 9 of the clamp are attached at the back to a block 25 which is fitted, at the back of the body 7, with a projecting part 125 of frustopyramidal shape, for example with a square base, as may be seen in Figure 3, the axis of which projecting part is perpendicular to the rod 119. The male element 125 engages in a cavity of matching, or female, shape 126 which is formed in a body 26 attached to the beam 27 that carries, adjacent to each other and an equal distance apart, a plurality of clamps of the type in question, and is connected to the actuation means necessary for gripping the sticks of a group of ice creams that have come out of the refrigeration tunnel and transferring them to a subsequent processing station. The prismatic connection 26, 126, 125 has aligned holes 29 and 30 through which a rod 128 passes and enters into a cavity 33 formed in the male element where it carries axial type elastic means 31 and a stop 32 against which the said elastic means 31 bear. The diameter of the hole 30 is suitably larger than the diameter of that portion of the rod 128 that passes through it. The other end of the rod 128 carries an integral piston 228 which slides with lateral sealing in the body of the associated unit 28 which is itself attached to the body 26 incorporating the female element 126 of the said prismatic connection. The unit 28 is, for example, a single-acting unit and is fitted with a tube 34 for retraction of the rod 128 and with elastic means 35 to extend the said rod 128. When the rod 128 is extended, the piston 228 is at the end of its stroke in its sliding cavity and the springs 31 are slack so as to allow a small degree of play between the male element 125 and the female element 126 of the prismatic connection, for example of about 1 millimetre, so that the jaws of the clamp can easily adjust their position and grip the ice cream stick 102, even if the latter is at an angle to or out of alignment with the ideal position, whether horizontally or vertically, as illustrated for example in Figures 7 and 8. The said play of about 1 millimetre in the connection allows a wide movement by the jaws of the clamp in either direction of a circle whose centre lies on the axis of the rod 128, with the clamp always being correctly oriented downwards by virtue of the prismatic shape of the connection 125, 126. Preferably, the clamp is switched to the articulated state once it has been positioned over the ice cream and before it is closed and remains in this state throughout the closure phase, the articulated joint being locked, by allowing compressed air to enter the tube 34, only once the clamp has closed and the pressing element 21 has come into play.

It should be understood that the description refers to a preferred embodiment of the invention which may undergo numerous variations and modifications, especially in terms of its construction, these variations and modifications involving, for example, the shape of the prismatic articulated joint 125, 126 or its orientation with respect to the clamp. The clamp may be oriented in a way other than that illustrated, and it may have levers and jaws designed for gripping in a vertical plane rather than a horizontal plane, as referred to herein. It should be understood that the clamp is protected even if it does not have the pressing element 21 and the associated actuating piston 19 and even if it does not have the link rods 17, 117, since the levers 4, 104 can be connected in a different way, via appropriate slits, to the movable element 14 which would be suitably built for the purpose. Other variations may involve the shape of the clamp jaws, which may vary as a function of the shape of the stick or some other part of the ice cream that may replace the stick. These variations, together with all the other modifications and adaptations which will be obvious to those skilled in the art, do not depart from the scope of the invention, as set forth above, as illustrated and as claimed below. In the claims, the reference numerals given in brackets are purely indicative and do not limit the scope of protection afforded thereby.

## Claims

1. Self-aligning articulated clamp, in particular designed for handling ice creams by their sticks, of the type comprising a pair of downward-oriented arms, the lower ends of which are fitted with jaws having a shape such that they can grip the ice cream stick, and the upper ends of which are connected to a self-centring actuating system and associated actuator, characterized in that the body of the said clamp is attached to a support body (26) via an articulated joint of any suitable type, with means which usually lock it in position and which, on command, preferably before the clamp is about to grip the ice cream by its stick, allow a small degree of play so that the clamp can oscillate about the axis of the said articulated joint so that, as it closes, it is able to grasp the stick correctly even if the latter is not in the ideal position, for example even if it is out of alignment and/or at an angle, the device being built such that, once the clamp has closed around the stick, the said articulated joint is once again locked so that the clamp returns to its original orientation and is rigidly connected to the support element.

2. Clamp according to Claim 1, in which the articulated joint is formed by the axial coupling of elements which have a non-circular section and which, during the locked phase, are pushed axially one inside the other and, during the unlocked phase, are axially loose so that there is a small degree of oscillatory, but not rotational, play between them, the axis of the articulated joint being oriented perpendicular to the longitudinal axis of the clamp.

3. Clamp according to Claim 1, in which the articulated joint has a frustopyramidal shape, for example with a square base, consists of a body (26) which is attached to the clamp-actuating frame (27) and which, for example, supports the female cavity (126) of the articulated joint, and consists of a block (25) attached to the body of the clamp and fitted with the projecting part that forms the male element (125) of the articulated joint that engages with the said female cavity and that in turn has an axial cavity (33) which accommodates elastic means (31) and the head (32) of a rod (128) that passes, with sufficient play, through an axial hole (30) in the male element, and through a guide hole (29) in the said body with the female cavity, and is connected to a fluid-pressure cylinder and piston unit (28), preferably a single-acting unit, with elastic means (35) that normally keep the articulated joint unlocked and with a compressed air supply tube (34), in order to retract the said rod and consequently lock the articulated joint as a result of the axial thrust exerted by the said rod and the interposed elastic means which axially push the male element into the female cavity.

4. Clamp according to the preceding claims, in which the levers (4; 104), whose lower ends carry the arms with the clamp jaws (1; 101) and which pivot at an intermediate point on the body (7) of the said clamp, are articulated at their upper ends to link rods (17; 117) which in turn are articulated via their other ends to the rod of a cylinder and piston unit whose body (9) is attached to the body of the clamp, the device being built such that, when the clamp is closed, the said link rods are perpendicular to the said rod or converge slightly in the direction of the associated piston, so that the clamp remains securely closed around the ice cream stick, even when there is no compressed air in the corresponding tube of the said cylinder and piston unit.

5. Clamp according to Claim 4, in which the jaws (1; 101) of the clamp have a V-shaped profile and one of these jaws is fitted with two teeth while the other has only one tooth which is aligned along the centre line of the gap between the two teeth on the other jaw.

6. Clamp according to Claim 4, in which the arms (3; 103) that carry the jaws of the clamp are rigid.

7. Clamp according to Claim 4, in which the arms (3; 103) that carry the jaws of the clamp are flexible and, for example, consist of leaf springs.

8. Clamp according to Claim 4, in which a rod (119) passes with lateral sealing axially through the rod and the piston (112; 12) that actuate the link rods connected to the levers (4; 104) of the clamp, the lower end of the said rod (119) carrying a pressing element (21) designed to act perpendicularly on the flat face of the stick, approximately in the middle of that portion of the stick which is gripped by the clamp jaws, the other end of the said rod being integral with a piston (19) which slides with lateral sealing in a chamber preferably formed in the same body (9) of the clamp-actuating cylinder and piston unit, the device being built such that the two cylinder and piston units are fitted with respective tubes for the forward stroke and with a common tube for the return stroke which opens the clamp and raises the said pressing element.
